# EUROPÄISCHE PATENTANMELDUNG

(11) **EP 0 838 671 A1**
(43) Veröffentlichungstag der Anmeldung: **29.04.1998**
(21) Anmeldenummer: 97117992.4
(22) Anmeldetag: 17.10.1997
(51) Int. Cl.: G01K 1/14

(54) **Kraftfahrzeug mit Mitteln zur Anzeige und/oder Auswertung von Aussentemperatur-Messsignalen**

(30) Priorität: 26.10.1996 DE 19644605
(71) Anmelder: ADAM OPEL AG, 65423 Rüsselsheim (DE)
(72) Erfinder: Pilger, Heiko, Dipl.-Ing., 64331 Weiterstadt (DE); Hassemer, Dieter, Dipl.-Ing. (FH), 55435 Gau-Algesheim (DE)
(74) Vertreter: Bergerin, Ralf, Dipl.-Ing.

(57) **Zusammenfassung**

Die Erfindung bezieht sich auf ein Kraftfahrzeug mit Mitteln zur Anzeige und/oder Auswertung von Außentemperatur-Meßsignalen und mit zumindest einem Sensor (4) zur Erfassung der Außentemperatur-Meßsignale, wobei der Sensor (4) in Baueinheit mit einem Antennenfuß (1) oder innerhalb eines Antennenstabes einer zur Kraftfahrzeugausstattung gehörenden Antenne angeordnet ist.

## Beschreibung

Die Erfindung bezieht sich auf ein Kraftfahrzeug mit Mitteln zur Erfassung, Anzeige und/oder Auswertung von Außentemperatur-Meßsignalen mit den im Oberbegriff der Patentansprüche 1 oder 10 angegebenen Merkmalen.

Kraftfahrzeuge dieser Art sind bekannt. Beispielsweise in der DE-PS 35 40 204 wird beschrieben, daß eine sensorisch erfaßte Außentemperatur angezeigt wird, wobei diese auch bei der Heizungsregelung oder Motorsteuerung Beachtung finden könnte. Problematisch ist die Beeinflussung des Temperatursensors durch Wärmestrahlung bei Stillstand des Kraftfahrzeugs, so daß in der DE-PS 35 40 204 vorgesehen ist, die Temperaturanzeige abhängig von der Fahrgeschwindigkeit zu verzögern. Wenn das Außentemperatur-Meßsignal höher ist als die zuletzt erfaßte Temperatur, wird ihm erst ab einer bestimmten Geschwindigkeit "geglaubt".

Nach der DE-OS 38 21 743 ist ein Temperatursensor nahe von Fotoelementen (zur Messung der Sonneneinstrahlung) in einem Kraftfahrzeug angeordnet, um Fehlregelungen bei kaltem Wetter mit Sonnenschein zu vermeiden.

In der DE-PS 41 30 680 und auch DE-PS 42 30 075 ist beschrieben, daß sowohl die Fahrgeschwindigkeit, wie weiter oben beschrieben, als auch die Motor-Kühlmitteltemperatur bei der Temperaturanzeige berücksichtigt werden. Dabei wird beachtet, daß Wärmestrahlung des Motors den Temperatursensor beeinflussen kann, da dieser im Motorbereich, beispielsweise hinter einem vorderen Stoßfänger angeordnet ist. Derartige Einrichtungen müssen fahrzeugtypspezifisch ausgelegt werden, da nie gleiche Bedingungen bestehen.

In der DE-OS 30 39 318 wird vorgeschlagen, den Rechner eines Rundfunkempfängers zur Auswertung von relevanten Fahrzeug- und Umgebungsdaten zu nutzen. Auch die Anzeige dieser Daten kann durch ein Anzeigefeld des Empfängers erfolgen.

Insgesamt zeigt der Stand der Technik den Nachteil, daß der erfaßten Außentemperatur nicht immer zu "glauben" ist. Die Sensoren werden aufgrund ihrer Anordnung negativ beeinflußt, so daß sie nicht immer die tatsächliche Außentemperatur erfassen. So ist nicht immer ein Außentemperatursignal vorhanden. Je nach Geschwindigkeit und/oder Motortemperatur des Fahrzeugs muß ein Auskommen ohne aktuellen Temperaturwert möglich sein. Diese Information ist aber gerade vor Fahrtantritt (Geschwindigkeit ist 0) oder sehr schnell danach gewünscht. Auch bei kaltem Motor wird gemäß des Standes der Technik die Anzeige und/oder Auswertung des aktuell gemessenen Wertes verzögert. Nach der DE-PS 42 30 075 wird bei geringer Differenz zwischen Temperatur-Meßwert und Motortemperatur, also beispielsweise bei länger abgestelltem Fahrzeug (Motortemperatur hat sich der Außentemperatur angepaßt) eine lange Verzögerungszeit für die Temperaturanzeige gewählt.

Es ist Aufgabe der Erfindung, ein Kraftfahrzeug der genannten Art zu schaffen, bei dem ohne Auftreten der genannten Nachteile des Standes der Technik eine nahezu ständig genaue Außentemperaturanzeige und/oder -auswertung möglich ist, wobei ein Temperatursensor mit geringem Aufwand so angeordnet werden soll, daß entweder ein genauer Temperatur-Meßwert erfaßt wird, oder verfälschende Einflüsse relativ exakt kalkulierbar, also direkt einzubeziehen sind.

Zur Lösung dieser Aufgabe zeichnet sich das erfindungsgemäße Kraftfahrzeug durch die im Patentanspruch 1 oder 10 angegebenen Merkmale aus. Einzelheiten der Erfindung ergeben sich aus den Patentansprüchen 2 bis 9.

Die Anordnung eines Temperatursensors in Baueinheit mit einem Antennenfuß einer zur Kraftfahrzeugausstattung gehörenden Antenne ist mit diversen Vorteilen verbunden. Da die Antenne an einem äußeren Karosserieelement des Fahrzeugs, vorzugsweise dem Fahrzeugdach anzuordnen ist, sind Einflüsse von Wärmequellen des Fahrzeugs selbst nahezu ausgeschlossen. Meßsignale des Sensors werden ausschließlich von den wetterbedingten Umgebungseinflüssen bestimmt. Eine Verfälschung durch Motor- oder auch sonstige Abwärme ist nicht möglich. Die Außentemperatur kann nach der Erfassung im Bereich Antennenfuß direkt angezeigt bzw. ausgewertet werden. Andererseits ist es möglich, wie bekannt, die Anzeige/Auswertung erst ab einer gewissen Fahrgeschwindigkeit zuzulassen, wenn der Einfluß der Sonneneinstrahlung auf den Temperatur-Meßwert minimiert werden soll. Selbst dieser Einfluß ist aber auch bei komfortabler Ausführung exakt bestimmbar und nahezu verzögerungsfrei aus dem Temperatur-Meßwert herausrechenbar, wenn ein Sonnensensor zusätzlich zum Einsatz kommt. Dieser ist bei modernen Fahrzeugen oft sowieso vorhanden, bedeutet also keinen zusätzlichen Aufwand.

Der Sensor im Antennenfuß kann nahezu unabhängig vom Fahrzeugtyp eingesetzt werden, wobei die Meßbedingungen immer etwa gleich sind. Es ist keine zusätzliche Karosserieöffnung erforderlich. Die Temperaturanzeige ist oftmals eine Funktion, die erst bei Ausstattung des Fahrzeugs mit einem Rundfunkempfänger angeboten wird, was zusätzlich für die Baueinheit Temperatursensor-Antenne spricht. Auch die Verdrahtung und Kontaktierung des Sensors gemeinsam mit der Antenne verringert den heute notwendigen Aufwand und führt zu Funktionsverbesserungen, da Leitungen und Steckkontakte im Fahrzeug-Innenraum angeordnet werden können.

Eine noch bessere thermische Entkopplung vom Fahrzeug ergibt sich, wenn der Temperatursensor im Antennenstab (Spitze) angeordnet wird. Bei nicht abnehmbaren Antennenstäben bestehen keine speziellen Probleme, wohingegen bei abnehmbaren Stäben der Kontaktierung des Sensors besondere Beachtung zukommt.

Wird der Temperatursensor in Baueinheit mit einer Antenne angeordnet, ergibt sich als weiterer Vorteil gegenüber heutigen Varianten eine geringe Anfälligkeit für Beschädigungen des Sensors. Heute im Frontbereich angebrachte Temperatursensoren können leicht durch Auffahren auf hohe Bürgersteige, auf Schnee- oder Erdhügel oder auch bei Auffahrunfällen zerstört werden, was nunmehr vermieden wird.

Details der Erfindung, insbesondere zu speziellen Fragen der Anordnung des Temperatursensors werden anhand zweier Ausführungsbeispiele beschrieben. Von den zugehörigen Zeichnungen zeigt
- Fig. 1:: eine Antenne auf einem Kraftfahrzeugdach in teilweise geschnittener und schematischer Darstellungsweise;
- Fig. 2:: eine Antenne mit Temperatursensor anderer Ausführung.

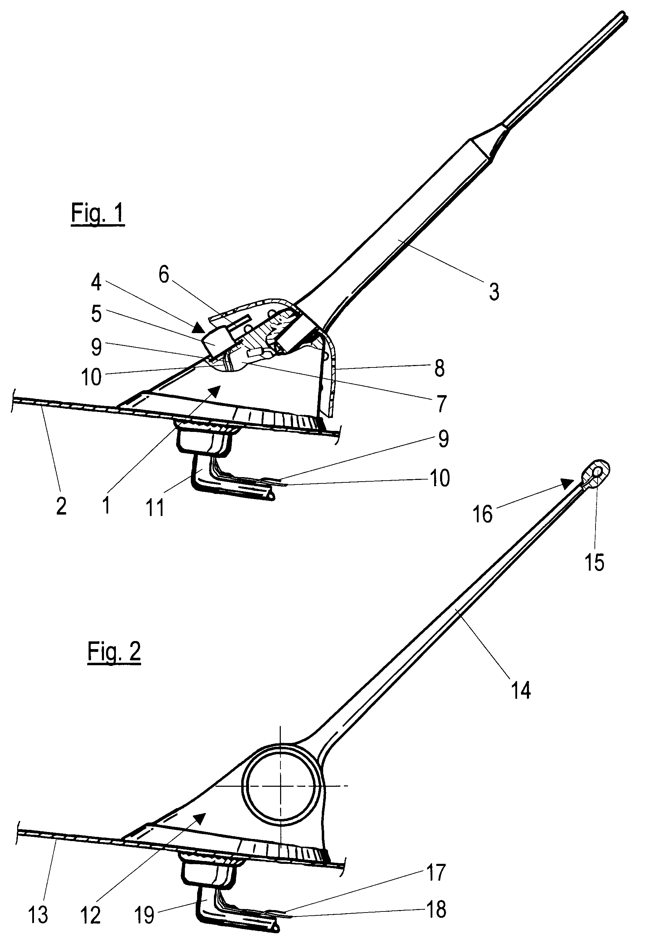

Wie in Fig. 1 gezeigt, ist eine Antenne an einem äußeren Karosserieelement eines Kraftfahrzeugs, insbesondere an seinem Dach befestigt. Ein Antennenfuß 1 ist in an sich bekannter Weise an einer Dachaußenfläche 2 angebracht, und an dem Antennenfuß 1 ist ein Antennenstab 3 verschraubt. Im allgemeinen sind Kraftfahrzeuge derart gestaltet, daß der Antennenfuß 1 direkt vom Fahrtwind angeströmt, also durch nichts verdeckt wird. Selbst bei Nutzung von Dachgepäckträgern kann der Fahrtwind frei über die Dachaußenfläche 2 zum Antennenfuß 1 gelangen. Die Antenne könnte jedoch auch an einem anderen Karosserieelement, beispielsweise einem Kotflügel angeordnet werden.

Am Antennenfuß 1 ist ein Sensor 4 zur Erfassung der Außentemperatur befestigt, wobei dieser Sensor 4 im speziellen Beispiel über die normalen Außenkonturen des Antennenfußes 1 hinausragt. Beim Fertigen des Gehäuses des Antennenfußes 1 wird ein stabiler Fuß 5 des Sensors 4 beispielsweise in eine Spritz-Gußform eingelegt und dann mit dem Gehäuse verbunden. Das Meßelement selbst befindet sich in dem stabförmigen Teil 6 des Sensors 4 (sehr kleiner PTC-Widerstand insbesondere in der Spitze des Teils 6), wobei das Meßelement so besonders gut thermisch entkoppelt ist. Weder vom Antennenfuß 1 noch von der Dachaußenfläche 2 noch von einer im Antennenfuß 1 befindlichen Elektronik 7 kann Wärme meßwertverfälschend übertragen werden.

Zum Schutz vor direkter Sonneneinstrahlung, aber auch vor Gewalteinwirkung ist der Sensor 4 von einer gelochten Kappe 8 abgedeckt. Die Kappe 8 ist hier Teil des Antennenstabes 3, so daß der Sensor 4 bei Fahrten durch die Waschanlage (ohne Antennenstab 3 und Kappe 8) gereinigt wird.

Der Sensor 4 ist mittels einer Zweidrahtleitung (Leitungen 9, 10) mit der Fahrzeugelektronik verbunden, wo eine Meßwertauswertung und ggf. -anzeige vorgenommen werden kann. Der Sensor 4 kann im Fahrzeug-Innenraum, also unter besonders unkritischen Bedingungen kontaktiert werden (Stecker zu den Leitungen 9, 10). Die Leitungen 9, 10 können gemeinsam mit vorhandenen Leitungen 11 der Antenne verlegt werden.

Bei anderer Ausführung der Erfindung könnte der Sensor auch in das Gehäuse des Antennenfußes eingespritzt werden, ohne daß er von außen sichtbar wäre. Andererseits könnte er auch wie die Antennenelektronik 7 in einen Kanal des Gehäuses eingeführt werden, wobei jedoch immer darauf zu achten ist, daß der Sensor thermisch entkoppelt bleibt. Unter dieser Voraussetzung ist selbst die mechanische Anbringung des Sensors an der Antennenelektronik 7 (an der Leiterplatte) möglich und bei Bestehen entsprechender Voraussetzungen kann selbst eine elektrische Kopplung mit der Antennenelektronik möglich sein, womit der Aufwand gesenkt werden kann. Beispielsweise könnte der Sensor von der Antennenelektronik aus mit Spannung bzw. einem Masseanschluß versorgt werden, was dazu führt, daß nur noch eine elektrische Leitung zu verlegen wäre. Ein gestörter Massekontakt der Antenne würde zu einer falschen Temperaturanzeige führen und wäre somit sehr schnell erkennbar, was heute nicht der Fall ist.

Ebenfalls nicht dargestellt, aber bei entsprechender Notwendigkeit ausführbar, ist die Anordnung des Temperatursensors in einem separaten Teil, welches dann gemeinsam mit dem Antennenfuß beispielsweise auf der Dachaußenfläche 2 befestigt wird. Dieses Teil kann der Form des Antennenfußes angepaßt und mit nur dessen Schraubverbindung befestigt werden. Diese Variante ist besonders dann vorteilhaft, wenn der Sensor nicht immer zur Fahrzeugausstattung gehört, wenn auch die Antenne vorgesehen ist.

Im Ausführungsbeispiel nach Fig. 2 ist ein Antennenfuß 12 an einer Dachaußenfläche 13 befestigt und ein Antennenstab 14 ist verschwenkbar, jedoch nicht abnehmbar mit dem Antennenfuß 12 verbunden. Hier ist ein Meßelement 15 zur Erfassung der Außentemperatur im Antennenstab 14, speziell in der Stabspitze 16 angeordnet. Damit wird eine maximal mögliche thermische Entkopplung erreicht. Auch hier sind Leitungen 17, 18 zu verlegen, wobei diese durch den Antennenstab 14 verlaufen und vom Drehgelenk aus mit dem Antennenkabel 19 verlegt sind. Auch für einen abnehmbaren Antennenstab ist diese Variante realisierbar, jedoch muß die sichere, von Wasser und Schmutz unbeeinflußte Kontaktierung des Meßelementes 15 gewährleistet sein.

## Patentansprüche

1. Kraftfahrzeug mit Mitteln zur Anzeige und/oder Auswertung von Außentemperatur-Meßsignalen und mit zumindest einem Sensor (4) zur Erfassung der Außentemperatur-Meßsignale, **dadurch gekennzeichnet**, daß der Sensor (4) in Baueinheit mit einem Antennenfuß (1) einer zur Kraftfahrzeugausstattung gehörenden Antenne angeordnet ist, wobei der Antennenfuß (1) an einem äußeren Karosserieelement des Kraftfahrzeugs befestigt ist.

2. Kraftfahrzeug nach Anspruch 1, **dadurch gekennzeichnet**, daß der Antennenfuß (1) in Baueinheit mit dem Sensor (4) auf einem Dach (2) des Kraftfahrzeugs angeordnet ist.

3. Kraftfahrzeug nach Anspruch 1 oder 2, **dadurch gekennzeichnet**, daß der Sensor in den Antennenfuß (1) integriert ist.

4. Kraftfahrzeug nach Anspruch 3, **dadurch gekennzeichnet**, daß der Sensor vollständig in ein Kunststoffgehäuse des Antennenfußes (1) eingebettet oder in einen Gang des Kunststoffgehäuses eingeführt ist, derart, daß eine thermische Isolation zu einer im Antennenfuß (1) angeordneten Antennenelektronik (7) sowie zum Dach (2) vorhanden ist.

5. Kraftfahrzeug nach Anspruch 3 oder 4, **dadurch gekennzeichnet**, daß der Sensor in mechanischer und/oder elektrischer Verbindung zu der Antennenelektronik (7) steht.

6. Kraftfahrzeug nach Anspruch 1 oder 2, **dadurch gekennzeichnet**, daß der Sensor in einem der Form des Antennenfußes (1) angepaßten separaten Teil angeordnet ist, wobei dieses separate Teil gemeinsam mit dem Antennenfuß (1) am Karosserieelement des Kraftfahrzeugs befestigt ist.

7. Kraftfahrzeug nach zumindest einem der Ansprüche 1 bis 3, **dadurch gekennzeichnet**, daß der Sensor (4) in Verbindung mit einem Kunststoffgehäuse des Antennenfußes (1), jedoch von diesem vorstehend angeordnet ist, derart, daß der Sensor (4) vom Antennenfuß (1) und vom Dach (2) thermisch entkoppelt ist.

8. Kraftfahrzeug nach zumindest einem der Ansprüche 1 bis 7, **dadurch gekennzeichnet**, daß der Sensor (4) mit zumindest einem elektrischen Leiter (9, 10) verbunden ist und dieser elektrische Leiter (9, 10) zumindest abschnittsweise gemeinsam mit zumindest einem elektrischen Leiter (11), der zu der Antennenelektronik (7) führt, im Kraftfahrzeug verlegt ist, wobei sich ggf. zugehörige Steckverbindungen im Kraftfahrzeug-Innenraum befinden.

9. Kraftfahrzeug nach zumindest einem der Ansprüche 1 bis 8, **dadurch gekennzeichnet**, daß zumindest der den Sensor (4) enthaltende Teil des Antennenfußes (1) von einem luftdurchlässigen Abdeckelement (8) beschattet und vor Beschädigungen geschützt wird.

10. Kraftfahrzeug mit Mitteln zur Anzeige und/oder Auswertung von Außentemperatur-Meßsignalen mit zumindest einem Sensor (15) zur Erfassung der Außentemperatur-Meßsignale, **dadurch gekennzeichnet**, daß der Sensor (15) in Baueinheit mit einem Antennenstab (14) einer zur Kraftfahrzeugausstattung gehörenden Antenne, insbesondere in der Spitze (16) des Antennenstabes (14) angeordnet ist, wobei die Antenne an einem äußeren Karosserieelement des Kraftfahrzeugs befestigt ist.
